# EUROPEAN PATENT SPECIFICATION

(11) **EP 0 932 301 B1**
(45) Date of publication and mention of the grant of the patent: **07.04.2004**
(21) Application number: 98113590.8
(22) Date of filing: 21.07.1998
(51) Int. Cl.: H04N 1/405

(54) **Developed toner mass control using split subpixel laser modulations**
Steuerung der entwickelten Tonermenge unter Verwendung von Lasermodulationen von getrennten Unterelementen eines Bildes
Commande de la masse de révélateur développé utilisant des modulations de laser en sous-éléments d'image dédoublés

(30) Priority: 27.01.1998 US 14296
(43) Date of publication of application: 28.07.1999
(73) Proprietor: Hewlett-Packard Company, A Delaware Corporation, Palo Alto, CA 94304 (US)
(72) Inventor: Awadalla, Emad M., Eagle, ID 83616 (US)
(74) Representative: Schoppe, Fritz, Dipl.-Ing.

(56) References cited:
- EP-A- 0 359 248
- EP-A- 0 533 377
- EP-A- 0 625 843
- EP-A- 0 717 553
- US-A- 4 553 173
- US-A- 5 420 614
- US-A- 5 708 514

## Description

This invention relates in general to image forming devices and, more particularly, to spot development for controlling toner/ink usage and toner scatter.

In electrophotographic printing, a pattern of electrostatic charges corresponding to a print image is developed on an optical photoconductor (OPC) using radiated energy, either visible spectrum light or optical energy outside the visible light spectrum. Conventionally, near infrared laser light is used to develop an electrostatic image on the OPC. The OPC is usually a continuous surface such as a drum or belt.

The laser light scans across the charged surface of photosensitive material on the OPC in a succession of scan lines. Each scan line is logically divided into picture element (pixel) areas and the laser beam is modulated such that selected pixel areas are exposed to light. Pixel size (or pixel space) is defined by a given dot pitch, scan velocity and spot size of the printer. The exposure to light results in the reduction of surface charges (or at least a reduction in voltage) on the OPC at those select pixel locations forming a latent image pattern. Subsequently, toner is applied (deposited) onto those pixel locations to form a visible image and this image is then transferred to a print media (usually a sheet of paper).

The toner transferred onto the sheet media appears in a pattern of dots (or spots), with each dot corresponding to a pixel (or combination of pixels for developing tones). While dots are usually associated with the image on the sheet media and pixels are usually associated with the corresponding electronic image, the one-to-one correspondence of dots to pixels commonly results in the terms being used interchangeably.

It is not practical to modulate the power of the laser other than to turn it on and off. There are too many environmental factors that are difficult to control that make operation of the laser diode in a non-saturated mode impractical. However, a similar effect is accomplished by turning the laser (full) on and off for periods of time shorter than what is needed or budgeted for developing the full pixel (dot) size for a given dot pitch and scan velocity. This is known as pulse width modulation (PWM) of the laser diode. Specifically, PWM is the modification of the duty cycle of the video (laser) signal wave form within a unit amount of time and has the effect of changing the level of exposure intensity. The duty cycle is the percent of time the signal is in an active state (for exposing a pixel space) within the specified unit amount of time. In essence, PWM permits a sub-sized pixel (or portion of a pixel) to be developed on an OPC. Thus, if the laser beam is modulated (using PWM), the resultant variations in charge left on the OPC will ultimately be translated to proportionate amounts of toner being developed onto the OPC and then transferred onto a sheet of paper. PWM is commonly used in applications such as gray scaling, halftoning, and color imaging (i.e., for precise mixing of colors as well as control of the intensity of the colors).

Clock signals that enable a precise pulse width modulation of 1/8 pixel amounts, for example, are known. However, PWM signals are conventionally utilized to shift the sub pixel development either to the center of the pixel or to the left or the right of the pixel. Namely, for example, a 50% PWM may be enabled to produce a half-size pixel on the OPC that is either centered within the original "full" pixel location/size, or is shifted to the left or right within the original full pixel location/size. In either case, a single, half-size sub pixel is developed somewhere within the original full pixel area.

Regardless of whether a full laser diode pulse is applied to develop a full sized pixel, or whether the laser is modulated using PWM to develop a sub pixel, the amount of toner mass that is applied (or attracted) to the developed area is critical to the quality of the resultant image that is transferred to media. Additionally, excessive toner that is unnecessarily attracted to the pixel or sub pixel is wasted. For example, too much developed toner mass tends to cause toner scatter, which is a dusting or blurring of the resultant image by the excess/wasted toner. This occurs in both monochrome and color imaging systems. This problem is magnified when the print engine uses a soft intermediate transfer belt. Scatter is especially noticeable when printing text because a cloud of toner surrounds the characters making them unclear. Additionally, toner scatter is exaggerated in connection with media that moves slower through the fusing system, such as with glossy paper.

Accordingly, objectives of the present invention are to control the amount of developed toner in an electrophotographic system, or the amount of ink used in an inkjet type imaging system, without adversely affecting print quality and, additionally, for reducing toner/ink waste.

EP 0359248 describes a laser irradiating apparatus wherein the pulse width of the laser is modulated when image data is below a preset value. The turned-on time for a one-quarter picture element is divided into two portions such that the integral amount of exposure for the divided quarter element is equal to that of the quarter pixel. A development of the quarter pixel can be achieved while the duty ratio of the distribution of the exposure is increased. The modulation pulses of the divided quarter element are splitted such that each of them is separated from the beginning and the end of a time frame for one pixel by a distance corresponding to 1/8 of the full pixel.

US 5420614 shows a digital image-forming apparatus wherein an image is formed according to image data by exposing a photo conductor in a raster scan. A scan line is divided into groups of consecutive dots by allowing the exposure of the photo conductor only for a predetermined light-imaging time. In order to smooth an image, a gap between dots is inserted only every N-dots in the emission signal. The pulse width of the single pulse is decreased or increased by changing the duty ratio of the signal.

It is in the object of the present invention to provide an improved method and apparatus image formation allowing for a precise control of a pixel development for saving imaging material yet maintaining print quality. This object is achieved by a method of claim 1, and by an apparatus of claim 7.

According to principles of the present invention in a preferred embodiment, a method and apparatus for developing pixels in an image forming device includes split developing one or more of the pixels using a split sub-pixel modulation technique. Split development provides for at least two non immediately adjacent areas of the pixel to be developed more fully than an area in between the two non immediately adjacent areas. In the context of a laser printer, the laser is sub-pixel modulated at least twice upon the photoconductive drum for selected pixels, thus effectuating a reduced discharge of the drum and reduced subsequent development of toner mass thereon. This controlled amount of developed toner mass reduces toner waste and toner scatter while maintaining image integrity. This split development is applied to select discrete pixels or to individual color planes as needed.

Other objectives, advantages, and capabilities of the present invention will become more apparent as the description proceeds.
FIG. 1 is high level block diagram of a page printer incorporating the present invention apparatus and method for split developing a pixel.
FIG. 2 is a timing diagram depicting clock pulses for developing a pixel, including for split developing a pixel under the present invention.
FIG. 3 is a block diagram of four separate bit maps representative of differing exemplary split pixel modulations.
FIG. 4 is a graph depicting voltage discharge depths for each of the split pixel modulation bit maps defined in FIG. 3.
FIG. 5 is a block diagram of four separate bit maps representative of conventional center located pulse width pixel modulation.
FIG. 6 is a graph depicting voltage discharge depths for each of the conventional center located pulse width pixel modulation bit maps of FIG. 5.
FIG. 7 is a flow chart depicting a preferred method of the present invention for split pixel development.

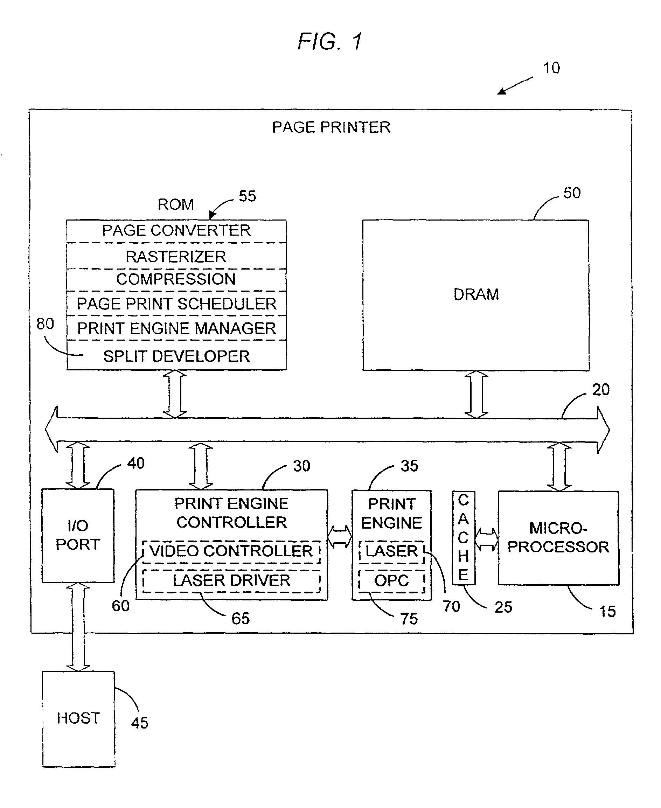

FIG. 1 is a high level block diagram of a page printer 10 incorporating the present invention apparatus and method for split pixel development whereby developed toner mass is controlled while maintaining image integrity, and toner usage and scatter is reduced. Page printer 10 is controlled by a microprocessor 15 which communicates with other elements of the system via bus 20. Microprocessor 15 includes cache memory 25 in a preferred embodiment. A print engine controller 30 and associated print engine 35 connect to bus 20 and provide the print output capability for the page printer. For purposes of this disclosure, print engine 35 is a laser printer that employs an electrophotographic drum imaging system, as well known in the art. However, as will be obvious to those of ordinary skill in the art, the present invention is similarly applicable to other types of printers and/or imaging devices including, for example, inkjet printers, facsimile machines, digital copiers, or the like.

An input/output (I/O) port 40 provides communications between the page printer 10 and a host computer 45 and receives page descriptions (or raster data) from the host for processing within the page printer. A dynamic random access memory (DRAM) 50 provides a main memory for the page printer for storing and processing a print job data stream received from host 45. A read only memory (ROM) 55 holds firmware which controls the operation of microprocessor 15 and page printer 10. Code procedures stored in ROM 55 include, for example, a page converter, rasterizer, compression code, page print scheduler, print engine manager, and/or other image processing procedures (not shown) for generating an image from a print job data stream. The page converter firmware converts a page description received from the host to a display command list, with each display command defining an object to be printed on the page. The rasterizer firmware converts each display command to an appropriate bit map (rasterized strip or band) and distributes the bit map into memory 50. The compression firmware compresses the rasterized strips in the event insufficient memory exists in memory 50 for holding the rasterized strips.

ROM 55 further includes split developer 80 according to principles of the present invention. Namely, split developer 80 includes routines, tables and/or other data structures necessary for enabling split development of pixels as will be discussed more fully herein.

In general, the operation of page printer 10 commences when it receives a page description from host computer 45 via I/O port 40 in the form of a print job data stream. The page description is placed in DRAM 50 and/or cache 25. Microprocessor 30 accesses the page description, line by line, and builds a display command list using the page converter firmware in ROM 55. As the display command list is being produced, the display commands are sorted by location on the page and allocated to page strips in memory 50. When all page strips have been evaluated, rasterized, compressed, etc. for processing by print engine 35, the page is closed and the rasterized strips are passed to print engine 35 by print engine controller 30, thereby enabling the generation of an image (i.e., text/graphics etc). The page print scheduler controls the sequencing and transferring of page strips to print engine controller 30. The print engine manager controls the operation of print engine controller 30 and, in turn, print engine 35.

Processor 15 feeds to a video controller 60 a raster image of binary values which represent the image to be imprinted on a page. The video controller, in response, feeds a series of binary data signals to a laser driver 65 which, in turn, modulates laser 70 in accordance with the binary data signals and in accordance with the present invention. Specifically, according to the present invention, laser 70 is split modulated at a sub-pixel level (where appropriate) for split developing the pixel to control depth of discharge of OPC 75 for, consequently, controlling developed toner mass on a media (sheet) that is passed by OPC 75, and for reducing toner waste and scatter.

As conventional in the art, the modulated beam from laser 70 is directed at a rotating, faceted mirror which scans the beam across an imaging lens which directs the scanned beam to a mirror which redirects the scanned beam onto a moving OPC 75. The laser beam is scanned across the OPC to cause selective discharge thereof in accordance with the modulation of the beam. At the termination of each scan action, the laser beam is incident on a photodetector which outputs a beam detect signal that is used to synchronize the actions of video controller 60 and processor 15.

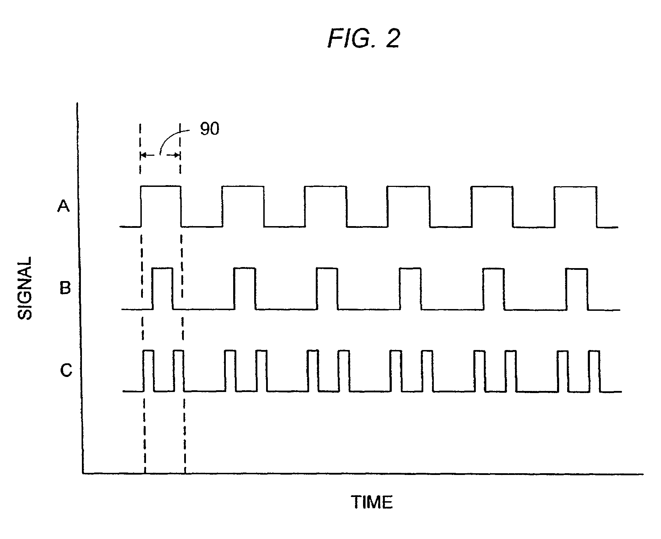

Referring now to FIG. 2, a timing diagram depicts three signals representing clock pulses as may be applied to laser driver 65 for pulsing laser 70. Signal "A" represents a full 100% clock pulse signal for full pixel development (exposure) within a reference time frame 90 as conventional in the art. Reference time frame 90 is based on a given dot pitch, scan velocity and spot size of printer 10. Signal "B" represents a conventional 50% centered clock pulse signal for a generally 50% centered pixel development. In contrast, signal "C" represents a 50% split clock pulse signal for split pixel development according to the present invention. Signal "C" represents a split pulse within the reference time frame 90 that is associated with fully developing the pixel (i.e., or pulsing the laser for a full amount of time budgeted) as shown in signal "A". Importantly, signal "C" depicts how split pulsing the clock signal includes pulsing the clock signal at least twice within the reference time frame 90 (of the full pulse) such that the at least two pulses are not immediately adjacent to each other. This split pulsing depicted in signal "C" is referred to herein as split-subpixel modulation (SSM).

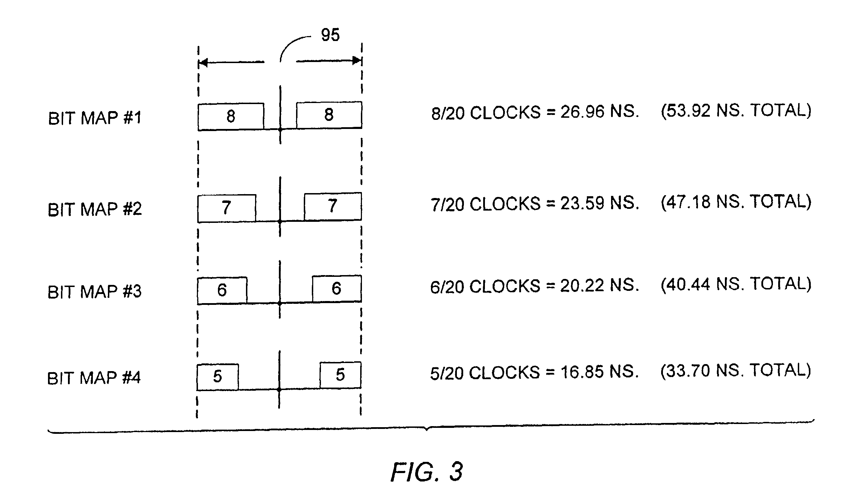

FIG. 3 is a block diagram of four separate bit maps representative of differing exemplary split pixel modulations in the context of a reference time frame 95 of twenty available clock counts per pixel (with the pixel size being associated with a given resolution of printer 10). Bit map #1 depicts an SSM of 8/20 clocks. Namely, two separate modulations (or pulses) each defined by eight clock counts (for a total of 16 clock counts) are separated by no modulation for four clock counts. Thus, the split modulations are not immediately adjacent to each other, but a resultant total modulation time equals 53.92 nanoseconds within the reference time frame 95. Bit map #2 depicts an SSM of 7/20 clocks whereby two separate modulations each defined by seven clock counts (for a total of 14 clock counts) are separated by no modulation for six clock counts, with a resultant total modulation time equal to 47.18 nanoseconds. Bit map #3 depicts an SSM of 6/20 clocks whereby two separate modulations each defined by six clock counts (for a total of 12 clock counts) are separated by no modulation for eight clock counts, with a resultant total modulation time equal to 40.44 nanoseconds. And finally, bit map #4 depicts an SSM of 5/20 clocks whereby two separate modulations each defined by five clock counts (for a total of 10 clock counts) are separated by no modulation for ten clock counts, with a resultant total modulation time equal to 33.70 nanoseconds.

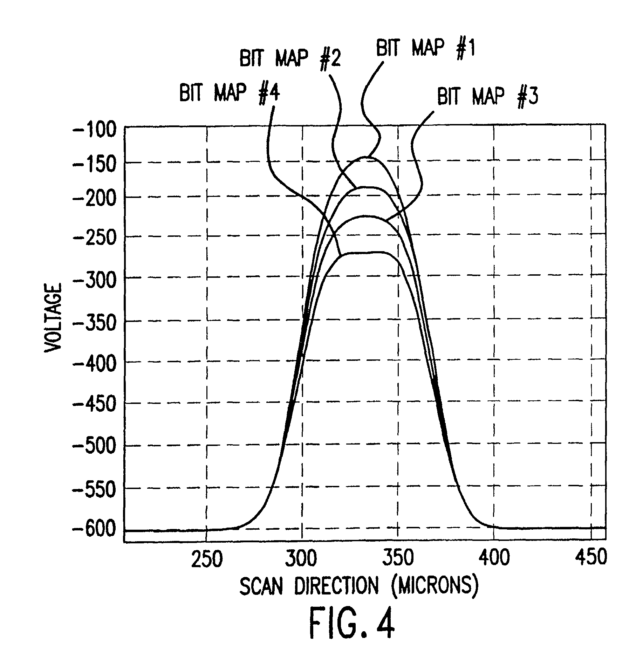

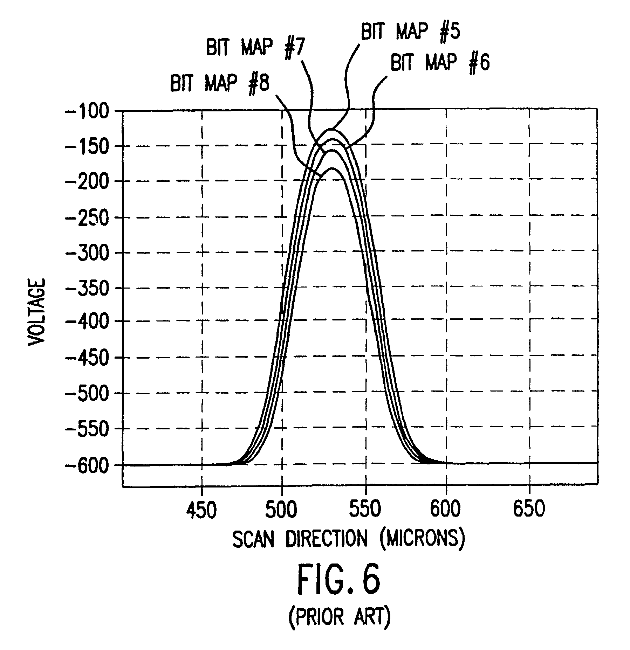

FIG. 4 is a graph depicting OPC 75 voltage discharge depths for each of the SSM bit maps defined in FIG. 3. As shown in FIG. 4, SSM bit map #1 results in a discharge depth of about -150 volts, bit map #2 discharges to about -190 volts, bit map #3 discharges to about -230 volts, and bit map #4 only discharges to about -275 volts. Thus, the greater the split between the pulses within the reference time frame 95 (for the pixel), the less the discharge of the OPC. After comparing this graph with conventional methods described in connection with FIG. 6 subsequently herein, it will be evident that the present invention split sub-pixel modulation enables reduced OPC discharge for reduced developed toner mass while maintaining image integrity.

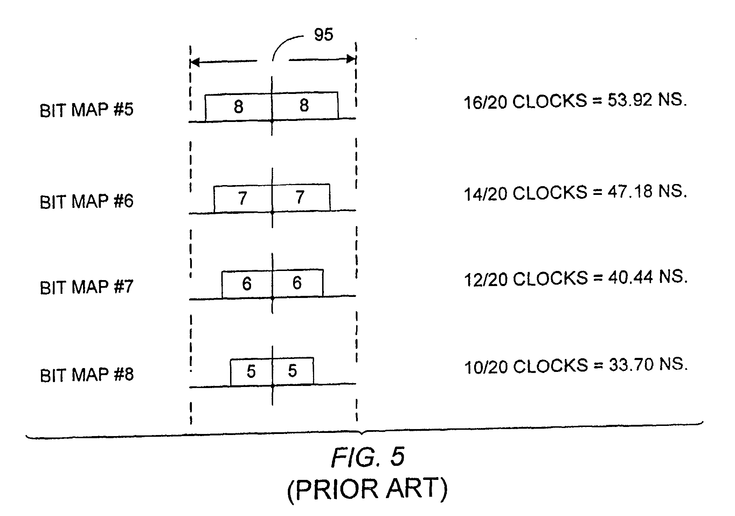

Referring now to FIG. 5, a block diagram depicts four separate bit maps representative of conventional "single" center located pulse width modulated exposures, shown also in the context of a reference time frame 95 of twenty available clock counts per pixel. FIG. 5 is shown to better compare what is conventional in the art with the novel split pixel modulations of FIG. 3. Specifically, bit map #5 depicts a centered modulation of 16/20 clocks for a resultant total modulation time equal to 53.92 nanoseconds. Bit map #6 depicts centered modulation of 14/20 clocks with a resultant total modulation time equal to 47.18 nanoseconds. Bit map #7 depicts a centered modulation of 12/20 clocks for a resultant total modulation time equal to 40.44 nanoseconds. And finally, bit map #8 depicts a centered modulation of 10/20 clocks for a resultant total modulation time equal to 33.70 nanoseconds.

FIG. 6 is a graph depicting OPC 75 voltage discharge depths for each of the conventional centered pixel bit maps defined in FIG. 5. As shown in FIG. 6, conventional centered bit map #5 results in a discharge depth of about -140 volts, bit map #6 discharges to about -150 volts, bit map #7discharges to about -160 volts, and bit map #8 discharges to about -190 volts. Thus, obviously, the less amount of centered modulation within the reference time frame 95 (for the pixel), the lesser the discharge of the OPC.

Comparatively, the resultant discharge depth of each of the SSM bit maps (of the present invention) is less than the discharge depth of each of the respective conventional center pulsed bit maps. Accordingly, any final deposit of toner to a sheet media passed by the OPC will be less when using the "split" sub-pixel modulation technique (FIGs. 3-4) than in the conventional "single" modulation techniques (FIGs. 5-6). Additionally, as can be seen from the graphs, the SSM method provides relatively large changes in the OPC discharge (or developed toner mass) for small changes in the actual laser "on" time. In essence, the amount of discharge control using SSM exposure is much more effective than similar single centered or edge located exposures. By using the SSM approach, the latent image discharge depth is controlled and varied without altering the resultant spot size. Developed toner is controlled without adversely effecting the print quality, and toner pile height and scatter are reduced.

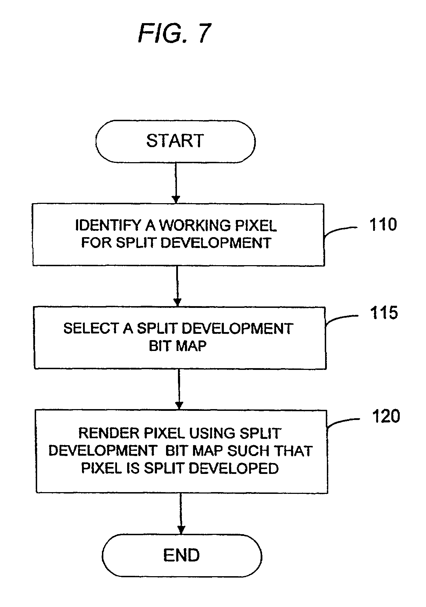

Referring now to FIG. 7, a flow chart depicts a preferred method of the present invention. First, 110, a working pixel is identified for split modulation (development). In a preferred embodiment, the working pixel is identified in a conventional manner such as with a template match. U.S. Patent Number 4,847,641 issued to *Tung* describes a preferred template matching technique. Specifically, *Tung* discloses a character generator that produces a bitmap of image data and inputs that bitmap into a first-in first-out (FIFO) data buffer. A fixed subset of the buffer stored bits forms a sampling window through which a selected block of the bitmap image data may be viewed (for example, a 9 x 9 block of pixels with the edge pixels truncated). The sampling window contains a center bit cell which changes on each shift of the image bits through the FIFO buffer. As the serialized data is shifted, the sampling window views successive bit patterns formed by pixels located at the window's center bit cell and its surrounding neighbor bit cells. Each bit pattern formed by the center bit and its neighboring bits is compared in a matching network with prestored templates. If a match occurs, indicating that the center bit resides at an image edge and that the pixel it represents can be altered so as to improve the image's resolution, a modulation signal is generated that causes the laser beam to alter the center pixel configuration. In general, the center pixel is made smaller than a standard unmodified bitmap pixel and is possibly moved within the confines of the pixel cell. The pixel size alteration is carried out by modulating the laser contained in the print engine of the laser printer. The system taught by *Tung* is now generally referred to as Resolution Enhancement Technology (RET) and enables substantially improved image resolutions to be achieved for text and line art over actual print engine resolution capability.

Returning again to FIG. 7, under the present invention in a preferred embodiment, a template match (similar to *Tung,* for example) identifies a discrete pixel to be split developed 110. Such a match is indicative of the pixel being a subject for controlled toner development and/or reduced toner scatter. ROM 55 (FIG. 1) holds the templates and/or color tables (or other data structures) and/or routines necessary for implementation of the pixel match. It should be noted that the term "templates" as used herein refers to stored configurations of pixel data and/or algorithms capable of representing the same. In any case, a template match represents a best fit or visual identical with respect to the selected pixel and its adjacent pixel data for implementation of split development on the selected pixel.

Upon identification of a working pixel 110 (i.e., a template match), a split development bit map is selected 115. The appropriate split development bit map to be used is directly associated with the template matched. For example, one of the split development bit maps #1, #2, #3 or #4 (of FIG. 3) may be assigned to the selected pixel, depending upon the template match. Regardless, the appropriate split development bit map to be used is previously determined by a "best fit" analysis or "visual identity" that is achieved through empirical evaluations of bit map comparisons with exemplary data generated to mimic various pixel configurations. The empirical evaluations are tuned by psychometric evaluations and/or by artificial intelligence training programs (algorithms) to create a "visual identity" for the split developed pixel in comparison with a non split developed pixel. The visual identity is evaluated such that the overall image appears visually pleasing and/or perceptually indistinguishable from the non split developed pixel image.

It should be noted here that SSM may be applied to discrete, identified selected pixels 110 as discussed, or it may be applied to an entire image or color plane (such as cyan, magenta, yellow or black; or red, green or blue). In the case of selecting an appropriate SSM bit map for a given color plane, color tables and/or other data structures (as well known in the art) stored in ROM 55 help define which SSM bit map to use.

Subsequent to selecting a split development bit map 115, the working pixel is rendered 120 using the selected split development bit map such that the pixel is split developed according to the present invention. These steps are repeated as appropriate for the entire image data stream presented for rendering.

Finally, what has been described are preferred embodiments for a system and method for split developing a pixel. In the context of an electrophotoconductive device such as a laser printer, split development is accomplished by a split-subpixel laser modulation exposure technique wherein at least two separate, non adjacent pulses define a pixel. In the context of an ink jet type device, split development is accomplished by a split-subpixel ink application technique where, for example, the total amount of ink nozzle activation time is controlled. Advantageously, the present invention provides a novel method for controlling developed toner mass and/or applied ink per unit area with small easily controlled split-subpixel modulations. Such a method enables enhanced control over the amount of developed toner (or applied ink) thereby reducing toner scatter and toner usage (and/or ink smear and ink usage) without adversely effecting the final print quality. Additionally, these changes in toner mass level do not affect spot size and do not adversely affect the color gamut in color environments.

It will be obvious to one of ordinary skill in the art that the present invention is easily implemented utilizing any of a variety of components and tools existing in the art.

## Claims

1. A method of controlling a pixel development in an image forming device (10), the method comprising split developing the pixel (FIG. 3) by pulsing a signal at least twice (FIG. 2, signal C) within a time frame (90) associated with fully developing the pixel, the at least twice pulsed signal effectuating a developing of at least two sub portions of the pixel within the time frame, wherein a first pulse of the at least twice pulsed signal starts at a beginning of the time frame (90) and a second pulse of the at least twice pulsed signal ends at an end of the time frame (90).

2. The method of claim 1 wherein the image forming device (10) includes an optical photoconductor (OPC) (75) for forming a latent image thereon, and wherein split developing the pixel includes exposing the OPC such that at least two non immediately adjacent areas of the pixel (FIG. 3) are discharged in response to the at least twice pulsed signal; and
depositing toner to the at least two non immediately adjacent areas.

3. The method of claim 1 wherein the pixel corresponds to a spot on a media and wherein split developing the pixel includes split developing the spot by depositing an ink upon the media in at least two non immediately adjacent areas of the spot (FIG. 3) in response to the at least twice pulsed signal.

4. The method of claim 1 wherein split developing includes:
(a) developing a first portion of the pixel in response to the at least twice pulsed signal; and,
(b) developing at least a second portion of the pixel not immediately adjacent to the first portion of the pixel in response to the at least twice pulsed signal.

5. The method of claim 4 wherein the pixel is defined by a given number of available clock signals (FIG. 3), and wherein developing a first portion of the pixel includes developing for a first time frame defined by a first subset of clock signals of the given number of clock signals, and wherein developing a second portion of the pixel includes developing for a second time frame defined by a second subset of clock signals of the given number of clock signals, and wherein the first and second subsets of clock signals are discontinuous relative to each other and are bound within the given number of clock signals.

6. The method of claim 1 wherein the image forming device (10) is selected from an electrophotographic printer, an ink jet printer, a facsimile device, or a digital copier.

7. An image forming device (10) comprising split development apparatus (80) for split developing a full pixel of the image forming device, wherein the split development apparatus includes a signal pulse apparatus (65) for pulsing a signal at least twice (FIG. 2, signal C) within a time frame (90) associated with fully developing the pixel, the at least twice pulsed signal effectuating a developing of at least two sub portions of the pixel within the time frame, wherein a first pulse of the at least twice pulsed signal starts at a beginning of the time frame (90) and a second pulse of the at least twice pulsed signal ends at an end of the time frame (90).

8. The image forming device of claim 7 wherein the signal pulse apparatus pulses the signal at least twice such that the pulses are not immediately adjacent to each other within the time frame (FIG. 2, signal C).

9. The image forming device of claim 7 wherein the image forming device (10) is selected from an electrophotographic printer, an ink jet printer, a facsimile device, or a digital copier.

## Patentansprüche

1. Ein Verfahren zum Steuern einer Pixelentwicklung in einem Bilderzeugungsgerät (10), wobei das Verfahren ein geteiltes Entwickeln des Pixels (Fig. 3) umfaßt, durch Pulsen eines Signals zumindest zweimal (Fig. 2, Signal C) in einem Zeitrahmen (90), der dem vollen Entwickeln des Pixels zugeordnet ist, wobei das zumindest zweimal gepulste Signal ein Entwickeln von zumindest zwei Unterabschnitten des Pixels in dem Zeitrahmen bewirkt, wobei ein erster Puls des zumindest zweimal gepulsten Signals an einem Anfang des Zeitrahmens (90) beginnt, und ein zweiter Puls des zumindest zweimal gepulsten Signals an einem Ende des Zeitrahmens (90) endet.

2. Das Verfahren gemäß Anspruch 1, bei dem das Bilderzeugungsgerät (10) einen optischen Photoleiter (OPC) (75) umfaßt, zum Bilden eines latenten Bildes auf demselben, und bei dem das geteilte Entwickeln des Pixels das Freilegen des OPS umfaßt, so daß zumindest zwei nicht unmittelbar benachbarte Bereiche des Pixels (Fig. 3) ansprechend auf das zumindest zweimal gepulste Signal entladen werden; und
Aufbringen von Toner auf die zumindest zwei nicht unmittelbar benachbarten Bereiche.

3. Das Verfahren gemäß Anspruch 1, bei dem das Pixel einem Punkt auf einem Medium entspricht, und bei dem das geteilte Entwickeln des Pixels das geteilte Entwickeln des Punkts umfaßt, durch Aufbringen einer Tinte auf das Medium in zumindest zwei nicht unmittelbar benachbarten Bereichen des Punkts (Fig. 3), ansprechend auf das zumindest zweimal gepulste Signal.

4. Das Verfahren gemäß Anspruch 1, bei dem das geteilte Entwickeln folgende Schritte umfaßt:
(a) Entwickeln eines ersten Abschnitts des Pixels ansprechend auf das zumindest zweimal gepulste Signal; und
(b) Entwickeln zumindest eines zweiten Abschnitts des Pixels nicht unmittelbar benachbart zu dem ersten Abschnitt des Pixels, ansprechend auf das zumindest zweimal gepulste Signal.

5. Das Verfahren gemäß Anspruch 4, bei dem das Pixel durch eine gegebene Anzahl verfügbarer Taktsignale definiert ist (Fig. 3), bei dem das Entwickeln eines ersten Abschnitts des Pixels das Entwickeln für einen ersten Zeitrahmen umfaßt, der durch einen ersten Teilsatz von Taktsignalen der gegebenen Anzahl von Taktsignalen definiert ist, und bei dem das Entwickeln eines zweiten Abschnitts des Pixels das Entwickeln für einen zweiten Zeitrahmen umfaßt, der durch einen zweiten Teilsatz von Taktsignalen der gegebenen Anzahl von Taktsignalen definiert ist, und bei dem der erste und der zweite Teilsatz von Taktsignalen diskontinuierlich bezüglich zueinander sind und innerhalb der gegebenen Anzahl von Taktsignalen gebunden sind.

6. Das Verfahren gemäß Anspruch 1, bei dem das Bilderzeugungsgerät (10) aus einem elektrophotographischen Drucker, einem Tintenstrahldrucker, einem Faksimilegerät oder einem Digitalkopierer ausgewählt ist.

7. Ein Bilderzeugungsgerät (10), das eine Geteilte-Entwicklung-Vorrichtung (80) zum geteilten Entwickeln eines vollen Pixels des Bilderzeugungsgeräts umfaßt, wobei die Geteilte-Entwicklung-Vorrichtung eine Signalpulsvorrichtung (65) zum Pulsen eines Signals zumindest zweimal (Fig. 2, Signal C) innerhalb eines Zeitrahmens (90), der einem vollen Entwickeln des Pixels zugeordnet ist, umfaßt, wobei das zumindest zweimal gepulste Signal ein Entwickeln von zumindest zwei Unterabschnitten des Pixels in dem Zeitrahmen bewirkt, wobei ein erster Puls des zumindest zweimal gepulsten Signals an einem Anfang des Zeitrahmens (90) beginnt, und ein zweiter Puls des zumindest zweimal gepulsten Signals an einem Ende des Zeitrahmens (90) endet.

8. Das Bilderzeugungsgerät gemäß Anspruch 7, bei dem die Signalpulsvorrichtung das Signal zumindest zweimal pulst, so daß die Pulse innerhalb des Zeitrahmens nicht unmittelbar benachbart zueinander sind (Fig. 2, Signal C).

9. Das Bilderzeugungsgerät gemäß Anspruch 7, bei dem das Bilderzeugungsgerät aus einem elektrophotographischen Drucker, einem Tintenstrahldrucker, einem Faksimilegerät oder einem Digitalkopierer ausgewählt ist.

## Revendications

1. Procédé de commande d'un développement de pixel dans un dispositif de formation d'image (10), le procédé comprenant le développement dédoublé du pixel (figure 3) par pulsation d'un signal au moins deux fois (figure 2, signal C) à l'intérieur d'une trame de temps (90) associée au développement complet du pixel, le signal au moins pulsé deux fois effectuant un développement d'au moins deux parties secondaires du pixel à l'intérieur de la trame de temps, dans lequel une première impulsion du signal pulsé au moins deux fois commence au début de la trame de temps (90) et une seconde impulsion du signal pulsé au moins deux fois se termine à la fin de la trame de temps (90).

2. Procédé selon la revendication 1, dans lequel le dispositif de formation d'image (10) comporte un photoconducteur optique (OPC) (75) destiné à former sur celui-ci une image latente et dans lequel le développement dédoublé du pixel comporte l'exposition de l'OPC de telle sorte qu'au moins deux zones non immédiatement adjacentes du pixel (figure 3) soient déchargées en réponse au signal pulsé au moins deux fois ; et
le dépôt d'un toner sur les au moins deux zones non immédiatement adjacentes.

3. Procédé selon la revendication 1, dans lequel le pixel correspond à un point sur un support et dans lequel le développement dédoublé du pixel comporte le développement dédoublé du point en déposant de l'encre sur le support dans au moins deux zones non immédiatement adjacentes du point (figure 3) en réponse au signal pulsé au moins deux fois.

4. Procédé selon la revendication 1, dans lequel le développement dédoublé comporte :
(a) le développement d'une première partie du pixel en réponse au signal pulsé au moins deux fois ; et
(b) le développement d'au moins une seconde partie du pixel qui n'est pas immédiatement adjacente à la première partie du pixel en réponse au signal pulsé au moins deux fois.

5. Procédé selon la revendication 4, dans lequel le pixel est défini par un nombre donné de signaux d'horloge disponibles (figure 3), et dans lequel le développement d'une première partie du pixel comporte le développement pendant une première trame de temps définie par un premier sous-ensemble de signaux d'horloge du nombre donné de signaux d'horloge, et dans lequel le développement d'une seconde partie du pixel comporte le développement pendant une seconde trame de temps définie par un second sous-ensemble de signaux d'horloge du nombre donné de signaux d'horloge, et dans lequel les premier et second sous-ensembles de signaux d'horloge sont discontinus l'un par rapport à l'autre et sont limités à l'intérieur du nombre donné de signaux d'horloge.

6. Procédé selon la revendication 1, dans lequel le dispositif de formation d'image (10) est choisi à partir d'une imprimante électrophotographique, une imprimante à jet d'encre, un dispositif de télécopie ou une photocopieuse numérique.

7. Dispositif de formation d'image (10) comprenant un dispositif de développement dédoublé (80) pour développer de manière dédoublée un pixel complet du dispositif de formation d'image, dans lequel le dispositif de développement dédoublé comporte un dispositif d'impulsion de signal (65) pour pulser un signal au moins deux fois (figure 2, signal C) à l'intérieur d'une trame de temps (90) associée au développement complet du pixel, le signal pulsé au moins deux fois effectuant un développement d'au moins deux parties secondaires du pixel à l'intérieur de la trame de temps, dans lequel une première impulsion du signal pulsé au moins deux fois commence au début de la trame de temps (90) et une seconde impulsion du signal pulsé au moins deux fois se termine à la fin de la trame de temps (90).

8. Dispositif de formation d'image selon la revendication 7, dans lequel le dispositif d'impulsion de signal pulse le signale au moins deux fois, de telle sorte que les impulsions ne soient pas immédiatement adjacentes l'une à l'autre à l'intérieur de la trame de temps (figure 2, signal C).

9. Dispositif de formation d'image selon la revendication 7, dans lequel le dispositif de formation d'image (10) est choisi à partir d'une imprimante électrophotographique, une imprimante à jet d'encre, un dispositif de télécopie ou une photocopieuse numérique.
